# EUROPEAN PATENT SPECIFICATION

(11) **EP 4 636 325 B1**
(45) Date of publication and mention of the grant of the patent: **25.11.2026**
(21) Application number: 25169605.0
(22) Date of filing: 10.04.2025
(51) Int. Cl.: F24F 7/00, F24F 13/20, F24F 13/24, F24F 8/80

(54) **FILTER FAN UNIT**
FILTERLÜFTEREINHEIT
UNITÉ DE VENTILATEUR DE FILTRE

(30) Priority: 18.04.2024 IN 202441031113
(43) Date of publication of application: 22.10.2025
(73) Proprietor: MANN+HUMMEL LIFE SCIENCES & ENVIRONMENT HOLDING SINGAPORE PTE. LTD., Singapore 139234 (SG)
(72) Inventor: ALZAGHARI, Milad, 139234 Singapore (SG); SPEHL, Frank, 139234 Singapore (SG); CATALANO, Franco, 139234 Singapore (SG); KALYANASUNDARAM, Santosh, 139234 Singapore (SG); ANISH, Ritesh, 139234 Singapore (SG)
(74) Representative: Mann + Hummel Intellectual Property

(56) References cited:
- EP-B1- 1 113 858
- CN-A- 1 837 693
- CN-U- 209 546 193
- US-A- 5 803 721
- US-B1- 6 641 364

## Description

### Technical Field

The invention relates to a filter fan unit.

### Background Art

EP 1 798 492 A2 discloses a filter fan unit that can be used in the ceiling of a clean room. The filter fan unit comprises a housing and a fan arranged in the housing. The fan is used to generate an air flow from an air inlet to an air outlet of the housing. Furthermore, the filter fan unit comprises a filter that is arranged at the air outlet. Air flows through the filter fan unit from the ceiling into the cleanroom and is extracted from the cleanroom close to the floor of the cleanroom.

The housing of the filter fan unit of EP 1 798 492 A2 has an opening for the fan and four side walls. The side walls extend from an air inlet plane, in which the opening is located, in the direction of the air outlet. An angle between the first side wall and the air inlet plane and an angle between a second side wall opposite the first side wall and the air inlet plane are each greater than 90°, so that the first side wall and the second side wall diverge in the direction of the air outlet.

The operation of the filter fan unit causes noise that should be kept as low as possible. In particular, undesirably high air speeds and turbulences in the fan and housing are the cause of an increased noise level which is also usually accompanied by higher energy consumption of the fan. Although the air flow through the housing can be optimised through a special design of the housing and fan, this usually leads to a more complex structure and higher manufacturing costs for the filter fan unit. When used in a ceiling system, the weight of the filter fan unit must also not be too great.

US 6 641 364 B1 discloses a fan unit comprising a fan blower configured to emit air in a plurality of directions in an air flow plane, a pair of guides disposed on opposite sides of said fan blower in the said air flow plane to guide the flow of air between the two guides, and upper and lower baffles at each end of the guides to direct air out of the unit. The fan blower is located on a base plate. A mounting plate for the fan blower is located on an opposing side of the base plate to the fan blower.

US 5 803 721 A discloses a clean room fan unit includes a rectangular housing that has a length and a width and that defines a rectangular cavity. A fan, which is configured to rotate about an axis, is located within the housing. A plate that is located within the housing supports the fan motor and has a series of perforations extending through the plate for the flow of air through the plate in a laminar state. A filter is located in the housing for removing contaminants from the flow of air. The filter is positioned adjacent the plate and extends across the cavity so that the filter defines a hollow plenum with the plate. An air guide plate is located below the motor support plate. A perforated plate is positioned below the air guide plate and the motor support plate.

### Summary

The invention is based on the object to provide a filter fan unit that can be manufactured cost-effectively, is lightweight and operates efficiently and quietly.

The object underlying the invention is solved by the combination of features according to claim 1. Embodiments of the invention can be taken from the subclaims to claim 1.

According to the invention, a perforated plate is arranged between the fan and the air outlet, wherein the perforated plate extends substantially parallel to the air inlet plane, wherein a first end edge of the plate and the first side wall are spaced apart from each other and wherein a second end edge of the plate and the second side wall are spaced apart from each other.

The perforated plate and its special arrangement between the first side wall and the second side wall results in a homogenous air distribution throughout the filter fan unit, and therefore an optimum utilisation of the filter. Preferably over the entire surface of the filter or over very large parts of the surface of the filter, the flow velocity through the filter is almost the same. The efficient use of the filter means that the power of the fan and the flow velocities in the housing can be kept comparatively low, which reduces noise emissions and saves energy.

The free space or gap between the first end edge of the perforated plate and the first side wall allows the air to reach the filter unhindered. A flow through the perforated plate is also possible, but in contrast to the flow through the gap, it is associated with a certain flow resistance. The flow resistance depends on the design and number of openings in the perforated plate. The larger the cumulative area of the openings in relation to the total area of the plate is, the lower the flow loss is when flowing through the plate.

For the gap between the second end edge of the perforated plate and the second side wall and for the flow conditions through this gap, the explanations in the paragraph above apply accordingly. In a preferred embodiment, the filter fan unit has an axially symmetrical structure. In this case, the gap between the first end edge of the plate and the first side wall corresponds in size and shape to the gap between the second end edge of the plate and the second side wall.

The filter can comprise a particle filter medium, such as a HEPA filter medium. The filter media may have one or more layers. The one or more layers may comprise different filter media. The filter media may be non-pleated, such as a filter mat, or pleated. The filter media may be made of synthetic and/or naturally occurring polymers. The filter media may be made of a spunbonded material, in particular a polyethylene terephthalate or polypropylene spunbonded material, and/or a needlebonded material, in particular a polypropylene or polyethylene terephthalate needlebonded material, and/or a meltblown layer and/or a multicomponent fiber material, in particular comprising bicomponent fibers with a polypropylene/polyacrylonitrile component.

The filter can be in the form of a panel filter. The panel filter may have a flat base surface, which extends parallel to the perforated plate. The filter may comprise one or more panel filters. Where the filter comprises more than one panel filter, the panel filters may be arranged in a V-shape relative to one another in order to maximize filter area.

In one embodiment, the housing has a preferably rectangular cover, which is located in the air inlet plane and which delimits the opening for the fan. The cover, the first side wall and the second side wall can be formed in one piece from a single component. The housing thus essentially forms a trapezoidal cuboid and is easy to manufacture due to the flat housing walls.

Preferably, the side walls and, if provided, the cover are made of aluminium so that the weight of the housing can be kept comparatively low. The side walls and/or the cover can also be made of plastic. Compared to plastic, however, aluminium has the advantage that there is no risk of molecular contamination from vapours released from the housing, which may otherwise pollute the air flowing through the filter fan unit.

The angle between the air inlet plane or the cover located in the air inlet plane and the first side wall can be 95° to 105°. In a preferred embodiment, the angle is 98° to 102°.

Unless otherwise stated, the explanations regarding the first side wall also apply analogously to the second side wall. Thus, the angle between the air inlet plane and the second side wall can also be 95 to 105°, preferably 98 to 102°. Although the axial symmetry described above is a feature of a preferred embodiment, the first side wall and the second side wall can differ from each other in terms of shape, orientation and arrangement. For example, the angle between the air inlet plane and the first side wall may be different from the angle between the air inlet plane and the second side wall.

The fan can be a radial fan, whereby an axis of rotation of the radial fan can be aligned perpendicular to the air inlet plane or to the cover of the housing. The air flow out of the radial fan is perpendicular to the axis of rotation.

The housing can have a third side wall and a fourth side wall opposite the third side wall which extend at a right angle from the air inlet plane. This results in a simple structure and simple manufacture of the housing. Further advantageously, the right angles of the third side wall and the fourth side wall allow space for air exiting the fan to flow without or with reduced restriction, thereby reducing air turbulence and noise emission. In one embodiment, the third side wall, cover and fourth side wall are made from a single piece of sheet metal. Other alternatives are also envisioned. For example, the cover, the first side wall, the second side wall, the third side wall and/or the fourth side wall can be made from a single piece of sheet metal.

In a preferred embodiment, the perforated plate extends to the third side wall and is attached to this third side wall. The perforated plate can also extend to the fourth side wall and also be attached to this side wall. In contrast to the first side wall and the second side wall, there is therefore no gap between the perforated plate and the third side wall and fourth side wall. This allows attachment of the perforated plate to the housing.

According to the invention, the plate has an outer region and an inner region, wherein a permeability of an outer region, which corresponds to a ratio of a cumulative area of all openings to a total area of the outer region, is different from a permeability of the inner region. In other words, the plate has different regions through which more or less volume of the air can flow. The different regions of the plate may provide more or less flow resistance. The perforated plate may be referred to as an air flow guide. Because the fan may not feed air into the filter uniformly, the different permeabilities of the plate, the gap between the first side wall and the first end edge of the plate and the gap between the second side wall and the second end edge of the plate allows the achievement of a very uniform flow through the filter in an easy way.

In one embodiment, the outer region has a greater permeability than the inner region. When the fan is a radial fan, air may exit the fan away from the axis of its motor. A greater volume and/or velocity of air may therefore be provided around the periphery of the fan. The outer region of the plate may be arranged to receive this greater volume of air. As air exiting the fan may bounce off the walls of the housing, the region next to the walls of the housing may receive air that has a lower velocity as compared to a region further away from the walls of the housing. Thus, high and low velocity areas result throughout the filter fan unit. The gap between the first side wall and the first end edge of the plate and the gap between the second side wall and the second end edge of the plate advantageously allow this air to be fed into the filter without or with less resistance. The inner region of the plate may be arranged below the motor of the fan and may therefore receive a lower volume as well as a lower velocity of air. Greater permeability can be achieved by a greater density of openings (number of openings per unit area) and/or by a larger area per opening. Preferably, the openings are circular. The openings can also have a different shape (e.g. oval, slotted, square).

The outer region of the perforated plate can completely enclose the inner region. If the perforated plate has a rectangular base form, the outer region can extend over the entire base form with the exception of the inner region. In this case, the outer boundary of the outer region would also be rectangular. The inner region, which can also be rectangular or have a different shape (round, oval, polygonal), is then located within the outer region.

The perforated plate can have a baffle on the first end edge facing the first side wall which is angled in the direction of the filter. The baffle is preferably not perforated and directs air that hits the baffle towards the gap between the first end edge and the first side wall. This baffle intensifies the flow through the gap and leads to a greater flow to the region of the filter directly behind the gap.

An angle between the baffle and a plate plane of the perforated plate can be 120 to 150°. In one embodiment, the angle is 125° to 135°.

A baffle can also be arranged on the second end edge. The orientation and design of this baffle can correspond to the orientation and design of the baffle at the first end edge.

In one embodiment, the plate has at least one material cut out that is inclined in the direction of the fan. The material cut out may be provided at the inner region of the plate. The material cut out may guide air into the inner region, thereby providing more air flow to the corresponding part of the filter downstream of the plate. This material cut out allows the flow through the plate to be additionally influenced in order to achieve a uniform flow through the filter downstream of the plate.

An inner side of the first side wall can be provided with an acoustic foam material. Preferably, the acoustic foam is open-pored so that sound waves can penetrate the material and effective sound absorption is possible. The acoustic foam can have a pyramid-shaped surface, which also ensures good sound absorption.

The second side wall can also be provided with the acoustic foam. In one embodiment, the third side wall and the fourth side wall are not provided with the acoustic foam, which simplifies the assembly and installation of the filter fan unit.

A pre-filter can be provided upstream of the fan. The pre-filter can be attached to the cover of the housing. The pre-filter can comprise a particle filter medium, such as those disclosed above. The pre-filter can alternatively or additionally comprise a molecular filter medium or an adsorbent, such as an activated carbon filter medium or a zeolite. The pre-filter can comprise a combination of different filter media. The pre-filter may comprise a filter medium that filters coarser particles as compared to the filter disclosed above.

The filter fan unit described here and in claims 1 to 14 can be used in a ceiling system for clean rooms.

### Brief Description of Drawings

The invention is explained in more detail with reference to an embodiment shown in the drawing. It is shown in:
Figure 1, a schematic sectional view of a filter fan unit according to the invention;
Figure 2, perspective view of the filter fan unit;
Figure 3, a cut-away half of the filter fan unit; and
Figure 4, a perforated plate for the filter fan unit in two different views (Figures 4A and 4B).

### Detailed Description

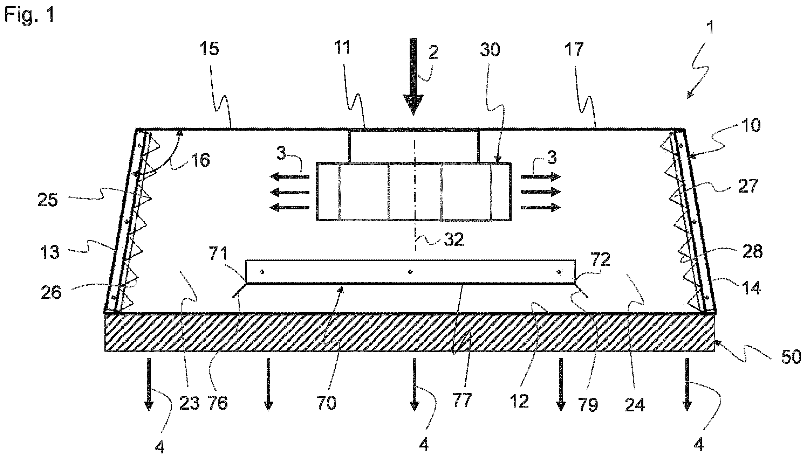

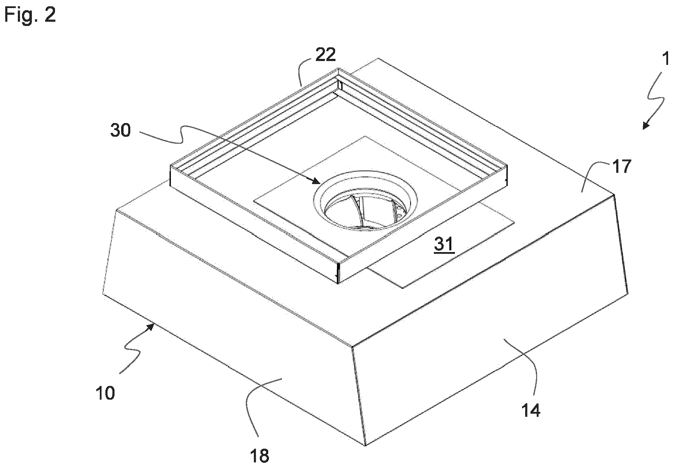

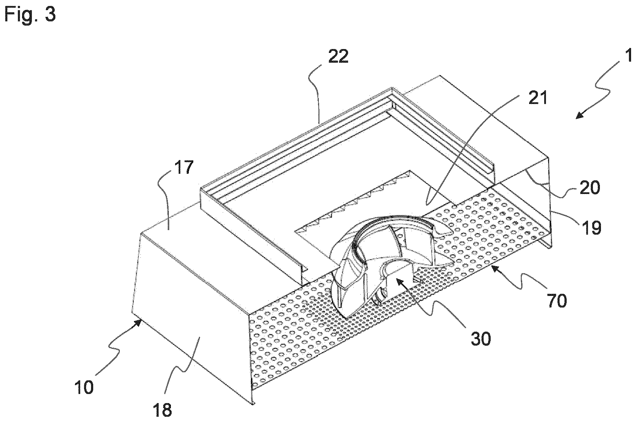

Figures 1 to 3 show a filter fan unit which is referenced with 1 in its entirety. Figure 1 shows the filter fan unit 1 schematically in longitudinal section. Figures 2 and 3 show the filter fan unit 1 in a perspective view, whereby one half of the filter housing unit 1 is cut away in Figure 3.

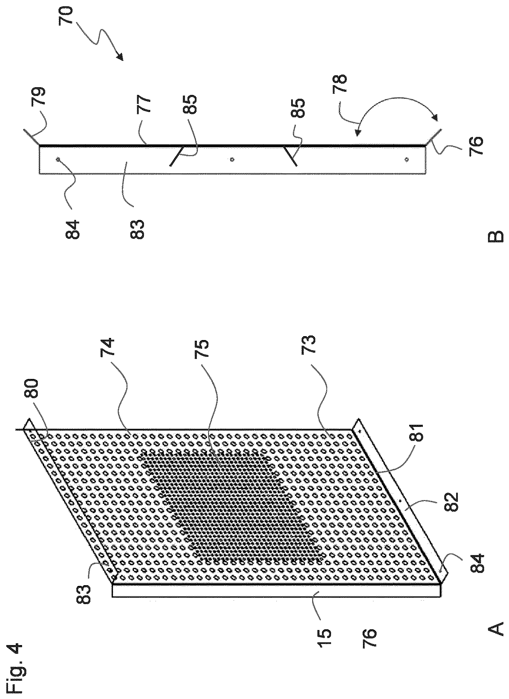

The filter fan unit 1 comprises a housing 10 and a fan 30 which is arranged in the housing 10. The fan 30 is a centrifugal fan and is shown only schematically in Figure 1. Furthermore, the filter fan unit 1 comprises a filter 50 and a perforated plate 70 which is also arranged in the housing 10. The perforated plate 70 is shown alone in Figure 4.

The fan 30 generates an air flow in the housing 10 from an air inlet 11 to an air outlet 12 of the housing 10. The filter 50, which is preferably a HEPA filter and is only shown in Figure 1, is arranged at the air outlet 12.

The housing 10 has a first side wall 13 and a second side wall 14 which is opposite the first side wall 13 (see Figure 1). The first side wall 13 and the second side wall 14 extend from an air inlet plane 15 to the air outlet 12. An angle 16 between the air inlet plane 15 and the first side wall is greater than 90° and is approximately 100° in the embodiment shown here. A corresponding angle between the air inlet plane 15 and the second side wall 14 is also around 100°.

A cover 17 of the housing 10, which connects the two side walls 13 and 14, is located in the air inlet plane 15. The housing 10 also has a third side wall 18 and a fourth side wall 19 opposite the third side wall 18 (see Figures 2 and 3). The fourth side wall 19 extends at a right angle from the air inlet plane 15 or from the cover 17. The corresponding angle is labelled 20 in Figure 3. The third side wall 18 is also perpendicular to the cover 17.

An opening 21 is provided in the cover 17, into which the fan 30 can be inserted. As can be seen in Figure 2, the fan 30 has a support plate 31 which is larger than the opening 21. In the installed position of the fan 30, the support plate 31 rests on the cover 17 or on the edge of the opening 21. A seal, not shown here, is preferably provided between the support plate 31 and the edge of the opening 21.

A rectangular frame 22 is attached to the cover 17 which serves to hold a pre-filter (not shown). The frame 22 is only shown in Figures 2 and 3, but not in Figure 1.

As shown schematically in Figure 1, the fan 30 draws in air through the air inlet 11. The air is drawn in substantially parallel to the arrow 2 and parallel to an axis of rotation 32 of the fan 30. The air sucked in by the fan 30 leaves the fan 30 in a radial direction (see arrows 3) in the direction of the side walls 13, 14, 18, 19.

Figure 1 also shows that a first end edge 71 of the perforated plate 70 and the first side wall 13 are spaced apart. A gap or free space 23 thus remains between the first end edge 71 and the first side wall 13, through which the air emerging from the fan 30 can reach the filter 50. A corresponding gap or free space between the second end edge 72 and the second side wall 14 is labelled 24 in Figure 1. The air also passes through this free space 24 from the fan 30 to the filter 50.

In the embodiment shown here, the distance between the first side wall 13 and the first end edge 71 of the plate 70 is as large as the distance between the second side wall 14 and the second end edge 72.

The sum of the distances can be 40 to 100 % of the length of the plate 70 (distance between the end edges 71, 72). In one embodiment, the sum of the distances is 70 to 90 % of the length of the plate 70, preferably with equal distances between the side walls 13, 14 and the end edges 71, 72. Uniform distribution of air volume and air velocities may be achieved across the filter fan unit and the filter.

A portion of the air from the fan 30 flows through the plate 70, more specifically through a plurality of openings 73 provided in the plate 70 (see Figure 4A). The plate 70 has a rectangular base, with the openings 73 distributed over the entire base. The plate 70 has an outer region 74 which completely encloses an inner region 75. The openings in the outer region 74 are larger than the openings in the inner region 75. Due to the free spaces 23, 24 and the plate 70 with its regions 74, 75, the flow is almost uniform across the entire surface of the filter 50, which is indicated by the arrows 4 in Figure 1. This means that the filter 50 is optimally utilised. Optimum utilisation of the filter 50 means that the power of the fan 30 and thus the speed at which the air exits the fan 30 can be reduced. This results in less noise and lower energy consumption.

The plate 70 has a baffle 76 at the first end edge 71, which is inclined in the direction of the filter 50 when the plate 70 is in the installed position. Air that hits the baffle 76 is thus increasingly channelled into the region of the air filter 50 which is located below the free space 23. An angle 78 between a plate plane 77 of the plate 70 and the baffle 76 is approximately 135° in the embodiment shown here (see Figure 4B). A baffle 79 is also provided at the second end edge 72, which, like the baffle 76, is inclined at an angle of 135° in the direction of the filter 50.

Angled webs 82, 83 are provided at transverse edges 80, 81 extending perpendicularly to the edges 71, 72, wherein the webs 82, 83 serve to fasten the plate 70 to the third side wall 18 and to the fourth side wall 19, respectively. The webs 82, 83 have holes 84 through which screws or similar fastening means can be passed in order to firmly connect the plate 70 to the housing 10. In contrast to the edges 71, 72 and the opposing side walls 13, 14, there is no gap or free space between the transverse edges 80, 81 and the side walls 18, 19.

Figure 4B shows two material cut outs 85 which are inclined in the opposite direction to the baffles 76, 79, i.e. in this case in the direction of the fan 30. The material cut outs 85 provide additional openings in the plate 70 so that the flow through the plate 70 is increased. In addition, similar to the baffles 76, 79, the material cut outs 85 specifically influence the flow towards the filter 50 with the aim of achieving a uniform flow through the filter 50. The material cut outs 85 advantageously guide the flow into a region of the plate 70 that may otherwise receive a lower volume of air, such as the inner region 75 of the plate 70. The material cut outs 85 may extend from a periphery of the inner region 75. The material cut outs 85 may extend from the plate 70 at an incline, thereby guiding the air flow into the inner region 75. An angle between the plate plane 77 and the material cut out is preferably 30 to 60°, for example 30 to 45°. The material cut outs 85 are not shown in the other figures.

To reduce the noise emission of the filter fan unit 1, an inner side of the first side wall 13 is provided or equipped with an acoustic foam 23. The acoustic foam 23 has a pyramid-shaped surface 24. The second side wall 14 is also provided or equipped with an acoustic foam material 25 which also has a pyramid-shaped surface 26.

### List of reference signs

- 1: filter fan unit
- 2: air flow / arrow
- 3: air flow / arrow
- 4: air flow / arrow

- 10: housing
- 11: air inlet
- 12: air outlet
- 13: first side wall
- 14: second side wall
- 15: air inlet level
- 16: angle
- 17: cover
- 18: third side wall
- 19: fourth side wall
- 20: angle
- 21: opening
- 22: frame for pre-filter
- 23: gap / free space
- 24: gap / free space
- 25: acoustic foam
- 26: pyramid-shaped surface
- 27: acoustic foam
- 28: pyramid-shaped surface
- 30: fan
- 31: support plate
- 32: rotation axis

- 50: filter

- 70: plate
- 71: first end edge
- 72: second end edge
- 73: opening
- 74: first region
- 75: second region
- 76: baffle
- 77: plate plane
- 79: baffle
- 80: transverse edge
- 81: transverse edge
- 82: bar
- 83: bar
- 84: hole
- 85: material cut out

## Claims

1. Filter fan unit (1) comprising:
- a housing (10);
- a fan (30) which is arranged in the housing (10) and serves to generate an air flow from an air inlet (11) to an air outlet (12) of the housing (30);
- a filter (50) which is arranged at the air outlet (12),
wherein the housing (10) has an opening (21) for the fan (30) and four side walls which extend from an air inlet plane (15), in which the opening (21) is located, in the direction of the air outlet (12), wherein an angle (16) between the first side wall (13) and the air inlet plane (15) and an angle between a second side wall (14) opposite the first side wall (13) and the air inlet plane (15) are each greater than 90°, so that the first side wall (13) and the second side wall (14) diverge in the direction of the air outlet (12),
**characterised in that** a perforated plate (70) is disposed between the fan and the air outlet, wherein the perforated plate (70) extends substantially parallel to the air inlet plane (15), wherein a first end edge (71) of the plate (70) and the first side wall (13) are spaced apart, and wherein a second end edge (72) of the plate (70) and the second side wall (14) are spaced apart,
wherein the plate (70) has an outer region (74) and an inner region (75), wherein a permeability of the outer region (74) which corresponds to a ratio of a cumulative area of all openings (73) to the total area of the outer region (74), is different from a permeability of the inner region (75).

2. Filter fan unit (1) according to claim 1, **characterised in that** the housing (10) has a cover (17) which lies in the air inlet plane (15) and delimits the opening (21) for the fan (30).

3. Filter fan unit (1) according to claim 1 or 2, **characterised in that** the angle (16) between the air inlet plane (15) and the first side wall (13) is 95° to 105°.

4. Filter housing unit (1) according to one of claims 1 to 3, **characterised in that** the fan (30) is a radial fan, wherein an axis of rotation (32) of the radial fan is aligned perpendicular to the air inlet plane (15).

5. Filter fan unit (1) according to one of claims 1 to 4, **characterised in that** the housing (10) has a third side wall (18) and a fourth side wall (19) opposite the third side wall (18) which extend at a right angle from the air inlet plane (15).

6. Filter fan unit (1) according to one of claims 1 to 5, **characterised in that** the perforated plate (70) extends to the third side wall (18) and is attached to the third side wall (18).

7. Filter fan unit (1) according to one of claims 1 to 6, **characterised in that** the outer region (74) completely encloses the inner region (75).

8. Filter fan unit (1) according to one of claims 1 to 7, **characterised in that** the perforated plate (70) has a baffle (76) angled in the direction of the filter (50) at the first end edge (71) facing the first side wall (13).

9. Filter fan unit (1) according to claim 8, **characterised in that** an angle between the baffle (76) and a plate plane (77) of the perforated plate (70) is 120 to 150°.

10. Filter fan unit (1) according to one of claims 1 to 9, **characterised in that** the plate (70) has at least one material cut out (85) which is inclined in the direction of the fan (30).

11. Filter fan unit (1) according to one of claims 1 to 10, **characterised in that** an inner side of the first side wall (13) is provided with an acoustic foam (25).

12. Filter fan unit (1) according to claim 11, **characterised in that** the acoustic foam (25) has a pyramid-shaped surface (26).

13. Filter fan unit according to one of claims 1 to 12, **characterised in that** a pre-filter is provided upstream of the fan (30).

## Patentansprüche

1. Filterlüftereinheit (1) umfassend:
- ein Gehäuse (10);
- einen Lüfter (30), der in dem Gehäuse (10) angeordnet ist und dazu dient, einen Luftstrom von einem Lufteinlass (11) zu einem Luftauslass (12) des Gehäuses (30) zu erzeugen;
- einen Filter (50), der an dem Luftauslass (12) angeordnet ist,
wobei das Gehäuse (10) eine Öffnung (21) für den Lüfter (30) und vier Seitenwände aufweist, die sich von einer Lufteinlassebene (15), in der sich die Öffnung (21) befindet, in Richtung des Luftauslasses (12) erstrecken, wobei ein Winkel (16) zwischen der ersten Seitenwand (13) und der Lufteinlassebene (15) und ein Winkel zwischen einer der ersten Seitenwand (13) gegenüberliegenden zweiten Seitenwand (14) und der Lufteinlassebene (15) jeweils größer als 90° sind, sodass die erste Seitenwand (13) und die zweite Seitenwand (14) in Richtung des Luftauslasses (12) divergieren,
**dadurch gekennzeichnet, dass** eine perforierte Platte (70) zwischen dem Lüfter und dem Luftauslass eingerichtet ist, wobei sich die perforierte Platte (70) im Wesentlichen parallel zu der Lufteinlassebene (15) erstreckt, wobei eine erste Endkante (71) der Platte (70) und die erste Seitenwand (13) beabstandet sind, und wobei eine zweite Endkante (72) der Platte (70) und die zweite Seitenwand (14) beabstandet sind,
wobei die Platte (70) einen äußeren Bereich (74) und einen inneren Bereich (75) aufweist, wobei eine Durchlässigkeit des äußeren Bereichs (74), die einem Verhältnis einer kumulativen Fläche aller Öffnungen (73) zu der Gesamtfläche des äußeren Bereichs (74) entspricht, sich von einer Durchlässigkeit des inneren Bereichs (75) unterscheidet.

2. Filterlüftereinheit (1) nach Anspruch 1, **dadurch gekennzeichnet, dass** das Gehäuse (10) eine Abdeckung (17) aufweist, die in der Lufteinlassebene (15) liegt und die Öffnung (21) für den Lüfter (30) begrenzt.

3. Filterlüftereinheit (1) nach Anspruch 1 oder 2,
**dadurch gekennzeichnet, dass** der Winkel (16) zwischen der Lufteinlassebene (15) und der ersten Seitenwand (13) 95° bis 105° beträgt.

4. Filtergehäuseeinheit (1) nach einem der Ansprüche 1 bis 3,
**dadurch gekennzeichnet, dass** der Lüfter (30) ein Radiallüfter ist, wobei eine Drehachse (32) des Radiallüfters senkrecht zu der Lufteinlassebene (15) ausgerichtet ist.

5. Filterlüftereinheit (1) nach einem der Ansprüche 1 bis 4,
**dadurch gekennzeichnet, dass** das Gehäuse (10) eine dritte Seitenwand (18) und eine der dritten Seitenwand (18) gegenüberliegende vierte Seitenwand (19) aufweist, die sich in einem rechten Winkel von der Lufteinlassebene (15) erstrecken.

6. Filterlüftereinheit (1) nach einem der Ansprüche 1 bis 5,
**dadurch gekennzeichnet, dass** sich die perforierte Platte (70) bis zu der dritten Seitenwand (18) erstreckt und an der dritten Seitenwand (18) angebracht ist.

7. Filterlüftereinheit (1) nach einem der Ansprüche 1 bis 6,
**dadurch gekennzeichnet, dass** der äußere Bereich (74) den inneren Bereich (75) vollständig umschließt.

8. Filterlüftereinheit (1) nach einem der Ansprüche 1 bis 7,
**dadurch gekennzeichnet, dass** die perforierte Platte (70) ein Leitblech (76) aufweist, das in Richtung des Filters (50) an der ersten Endkante (71), die der ersten Seitenwand (13) zugewandt ist, abgewinkelt ist.

9. Filterlüftereinheit (1) nach Anspruch 8, **dadurch gekennzeichnet, dass** ein Winkel zwischen dem Leitblech (76) und einer Plattenebene (77) der perforierten Platte (70) 120 bis 150° beträgt.

10. Filterlüftereinheit (1) nach einem der Ansprüche 1 bis 9,
**dadurch gekennzeichnet, dass** die Platte (70) mindestens einen Materialausschnitt (85) aufweist, der in Richtung des Lüfters (30) geneigt ist.

11. Filterlüftereinheit (1) nach einem der Ansprüche 1 bis 10,
**dadurch gekennzeichnet, dass** eine innere Seite der ersten Seitenwand (13) mit einem Akustikschaum (25) versehen ist.

12. Filterlüftereinheit (1) nach Anspruch 11, **dadurch gekennzeichnet, dass** der Akustikschaum (25) eine pyramidenförmige Oberfläche (26) aufweist.

13. Filterlüftereinheit nach einem der Ansprüche 1 bis 12,
**dadurch gekennzeichnet, dass** ein Vorfilter stromaufwärts des Lüfters (30) bereitgestellt ist.

## Revendications

1. Unité de ventilateur à filtre (1) comprenant :
- un boîtier (10) ;
- un ventilateur (30) qui est disposé dans le boîtier (10) et sert à générer un flux d'air depuis une entrée d'air (11) vers une sortie d'air (12) du boîtier (30) ;
- un filtre (50) qui est disposé à la sortie d'air (12),
dans laquelle le boîtier (10) a une ouverture (21) pour le ventilateur (30) et quatre parois latérales qui s'étendent depuis un plan d'entrée d'air (15), dans laquelle l'ouverture (21) est située, en direction de la sortie d'air (12), dans laquelle un angle (16) entre la première paroi latérale (13) et le plan d'entrée d'air (15) et un angle entre une deuxième paroi latérale (14) opposée à la première paroi latérale (13) et le plan d'entrée d'air (15) sont chacun supérieurs à 90 °, de sorte que la première paroi latérale (13) et la deuxième paroi latérale (14) divergent en direction de la sortie d'air (12),
**caractérisée en ce qu'**une plaque perforée (70) est disposée entre le ventilateur et la sortie d'air, dans laquelle la plaque perforée (70) s'étend sensiblement parallèlement au plan d'entrée d'air (15), dans laquelle un premier bord d'extrémité (71) de la plaque (70) et la première paroi latérale (13) sont espacés, et dans laquelle un second bord d'extrémité (72) de la plaque (70) et la deuxième paroi latérale (14) sont espacés,
dans laquelle la plaque (70) a une région externe (74) et une région interne (75), dans laquelle une perméabilité de la région externe (74) qui correspond à un rapport d'une surface cumulée de toutes les ouvertures (73) sur la surface totale de la région externe (74), est différente d'une perméabilité de la région interne (75).

2. Unité de ventilateur à filtre (1) selon la revendication 1,
**caractérisée en ce que** le boîtier (10) a un couvercle (17) qui se trouve dans le plan d'entrée d'air (15) et délimite l'ouverture (21) pour le ventilateur (30).

3. Unité de ventilateur à filtre (1) selon la revendication 1 ou 2, **caractérisée en ce que** l'angle (16) entre le plan d'entrée d'air (15) et la première paroi latérale (13) est de 95 ° à 105 °.

4. Unité de boîtier de filtre (1) selon l'une des revendications 1 à 3, **caractérisée en ce que** le ventilateur (30) est un ventilateur radial, dans laquelle un axe de rotation (32) du ventilateur radial est aligné perpendiculairement au plan d'entrée d'air (15).

5. Unité de ventilateur à filtre (1) selon l'une des revendications 1 à 4, **caractérisée en ce que** le boîtier (10) a une troisième paroi latérale (18) et une quatrième paroi latérale (19) opposée à la troisième paroi latérale (18) qui s'étendent à angle droit à partir du plan d'entrée d'air (15).

6. Unité de ventilateur à filtre (1) selon l'une des revendications 1 à 5, **caractérisée en ce que** la plaque perforée (70) s'étend jusqu'à la troisième paroi latérale (18) et est fixée à la troisième paroi latérale (18).

7. Unité de ventilateur à filtre (1) selon l'une des revendications 1 à 6, **caractérisée en ce que** la région extérieure (74) entoure complètement la région intérieure (75).

8. Unité de ventilateur à filtre (1) selon l'une des revendications 1 à 7, **caractérisée en ce que** la plaque perforée (70) a un déflecteur (76) incliné en direction du filtre (50) au niveau du premier bord d'extrémité (71) faisant face à la première paroi latérale (13).

9. Unité de ventilateur à filtre (1) selon la revendication 8,
**caractérisée en ce qu'**un angle entre le déflecteur (76) et un plan de plaque (77) de la plaque perforée (70) est de 120 à 150 °.

10. Unité de ventilateur à filtre (1) selon l'une des revendications 1 à 9, **caractérisée en ce que** la plaque (70) a au moins une découpe de matière (85) qui est inclinée en direction du ventilateur (30).

11. Unité de ventilateur à filtre (1) selon l'une des revendications 1 à 10, **caractérisée en ce qu'**une face interne de la première paroi latérale (13) est pourvue d'une mousse acoustique (25).

12. Unité de ventilateur à filtre (1) selon la revendication 11,
**caractérisée en ce que** la mousse acoustique (25) a une surface de forme pyramidale (26).

13. Unité de ventilateur à filtre selon l'une des revendications 1 à 12, **caractérisée en ce qu'**un préfiltre est prévu en amont du ventilateur (30).
